# EUROPEAN PATENT APPLICATION

(11) **EP 1 762 422 A1**
(43) Date of publication of application: **14.03.2007**
(21) Application number: 06254657.7
(22) Date of filing: 07.09.2006
(51) Int. Cl.: B60K 37/06, B60R 1/07, E05F 15/16

(54) **Switch arrangement**

(30) Priority: 12.09.2005 GB 0518569
(71) Applicant: Nissan Motor Manufacturing (UK) Ltd., Bedfordshire MK43 0DB (GB)
(72) Inventor: Stanley, Daren Nissan Motor Manufac. (UK) Ltd, Bedfordshire MK43 0DB (GB); Moore, David Nissan Motor Manufac. (UK) Ltd, Bedfordshire MK43 0DB (GB); Taverner, Russell Nissan Motor Manufac. (UK) Ltd, Bedfordshire MK43 0DB (GB); Parker, Chistopher Nissan Motor Manufac. (UK) Ltd, Bedfordshire MK43 0DB (GB)
(74) Representative: Holmes, Matthew William

(57) **Abstract**

A switch arrangement for controlling the operation of a plurality of electrically operable devices has an array of controls for controlling the operation of each of the devices and a device selection switch operable between a plurality of switch states, each state corresponding to a selected device, wherein the device selection switch is superimposed on the control array such that only those controls in the array relating to the device selected are accessible. The switch arrangement is particularly useful for a vehicle where it may be used to control both the opening and closing of electrically operable windows and the adjustment of electrically operable door or wing mirrors. The various controls may be presented in a circular array with a rotary device selection switch.

## Description

The present invention relates to a switch arrangement and particularly, but not exclusively, to a switch arrangement for controlling the operation of two or more electrically operable devices. The invention finds particular application in the controlling and/or operation of electric windows and electric wing mirrors of a vehicle such as an automobile.

Most modem vehicles, especially automobiles, are equipped with both electrically operable windows and electrically adjustable wing mirrors and have hitherto required separate control means for each function. Typically, the control means have included a first switch arrangement, accessible by the driver of the vehicle, to permit the driver to operate each of the vehicle windows individually. The arrangement has usually involved a cluster or "bank" of four individual switches in the centre console of the vehicle or, more commonly, on an armrest located on the inside of the driver's door. A further switch arrangement for adjusting the position of the wing mirrors has also been necessary, such an arrangement usually comprising a first switch for selecting which of the right hand or left hand wing mirrors is to be adjusted, and a second switch for performing the angular adjustment of the mirror selected. Again, the latter switch arrangement has been provided at a location convenient to the driver, such as on the instrument panel, on the centre console or on the armrest of the driver's door.

More recently, efforts have been made to limit the number of switches required to operate the vehicle's windows and mirrors, particularly with a view to saving on production cost and also to reducing the space taken up in the vehicle by the various arrangements. For example, WO 2005/044631 describes a switch arrangement that allows for the control of both the electric windows and the electric wing mirrors of a vehicle whilst using only two switches. In particular, each of the two switches is operable between a plurality of switch states, the arrangement being such that actuation of the first switch operates the window mechanism when the second switch is in a first one of its switch states, and actuation of the second switch operates the wing mirror mechanism when the first switch is in a first of one of its switch states.

Whilst the aforementioned advance may contribute to a saving in production cost and space, the layout of the switches is relatively complex and requires a degree of concentration on the part of the driver to select the correct combination of switching positions on both switches to achieve the desired result. This is clearly undesirable as there is a risk of the driver paying insufficient attention to the road ahead when seeking to adjust the mirror positions and or windows whilst the vehicle is in motion.

It is therefore an object of the present invention to provide a switch arrangement which permits both operation of a set of electrically operable windows of the vehicle and adjustment of a pair of electrically adjustable wing mirrors as before, yet reduces the opportunity for the driver to select inadvertently an incorrect combination of switch positions for the window and/or mirror manoeuvre being sought. For convenience, the expression "wing mirror(s)" includes mirrors that are affixed to the driver and front passenger doors as well as those affixed to the vehicle's wings.

According to a first aspect, the invention resides in a switch arrangement for controlling the operation of a plurality of electrically operable devices, the switch arrangement comprising an array of controls for controlling the operation of each of the devices and a device selection switch operable between a plurality of switch states each state corresponding to a selected device, wherein the device selection switch is superimposed on the control array such that only those controls in the array relating to the device selected are accessible.

By means of the invention, it is therefore possible for a driver to select which of the devices he wishes to actuate simply by operating the device selection switch and, once he has made that selection, he has access to those controls in the array that control the movement of the selected device. The driver will rapidly become familiar with the positioning of the device selection switch such that he can operate it without the need to look at it in order to select which device, for example the window or wing mirror, position he wishes to alter. Once selected, the driver can then alter the position without risk of accidentally moving the position of a device not selected. Again familiarity with the layout of the movement control array will allow the driver to carry out this operation without needing to look down at the switch arrangement and take his eyes off the road.

Each of the plurality of switch states of the device selection switch preferably corresponds to a different switch position, more preferably to a latched position, with each latched position being achieved through mechanical latching means within the switch or through electronic or logic state latching.

The controls in the control array are preferably actuated by pressure-sensitive, temperature-sensitive or electrically conductive means. In a particularly preferred arrangement, the controls comprise push button controls.

To enhance the appearance of the switch arrangement and to avoid ingress of dust and dirt into the controls, there is preferably provided a control pad interposed between the device selection switch and the array of controls. Accordingly, references herein to the controls being exposed or accessible are to be construed as being directly or indirectly exposed or accessible depending on whether a control pad is present.

The control pad may be segmented, with each segment corresponding to one of the controls in the array and each adapted to communicate with its associated control when selected. For example, each segment may be pressure-sensitive and hence, when depressed by the driver's finger, will activate the push button control beneath.

Each of the controls, or the corresponding areas of the control pad overlying the controls, advantageously carries on its upper surface a visual indicator of the direction of movement resulting from operation of the control, typically in the form of an arrow, optionally in conjunction with an indicator showing that control's function, for example, a mirror or window symbol. Alternatively, or in addition, indicators showing which of the devices is selected for movement may be provided outside of the array, preferably on the control pad, the indicators being aligned with the device selection switch at its various switch positions. Any such visual indicator may be illuminated or of light reflective material to assist in identifying the switch state in low light conditions.

Whilst the controls may be arranged in a linear or a multi-linear array with the overlying device selection switch being translatory, it is preferred that the controls be arranged in a substantially circular array with the device selection switch being a rotary switch rotatable about the centre of the circle. The latter such arrangement is particularly compact and therefore contributes both economically in production cost and also in providing aesthetic appeal.

More preferably, the device selection switch comprises a rotary switch having a plurality of arms extending radially from the centre, each arm being of sufficient width to obscure at least one of the controls in the array and the radial spacing of adjacent arms being sufficient to expose at least one of the controls therebetween. For simplicity of operation, it is particularly preferred that alternate controls in the array are exposed between the arms of the device selection switch.

Since the majority of devices for which the switch arrangement of the invention is particularly suitable may be adjusted using a maximum of four directional controls (e.g. in the case of a wing mirror which can be tilted in three dimensions, by pitching about a generally horizontal axis extending laterally across the vehicle and yawing about a substantially vertical axis), it is preferred that the number of controls in the control array be a multiple of four.

Most conveniently, the control array comprises eight controls symmetrically arranged in a circle. With such an arrangement, the device selection switch may comprise a generally cruciform rotary switch. In this way, in one switch state, every other one of the eight controls, four in total, is exposed between the arms of the device selection switch and the remaining four controls are obscured by the arms. In another switch state, the remaining four controls are exposed with the four previously exposed controls now being obscured.

In an arrangement comprising a circular array of eight controls and using a cruciform device selection switch, a first switch state (hereinafter also referred to as "the home position") preferably involves the selection switch having its arms extending along the compass points, N, S, E and W. In such a position, going clockwise, there will be four exposed controls at the NE, SE, SW and NW points. Moving the selection switch 45° anti-clockwise to a second switch state (hereinafter "the left hand position") will expose the four previously obscured controls at the N, S, E and W points, as will moving the switch 45° in a clockwise direction from the home position to a third switch state (hereinafter "the right hand position"). In both of the left hand and right hand positions, the controls at the NE, SE, SW and NW points are no longer exposed.

References herein to compass positions are for ease of understanding only, these being simpler to visualise than references to 0°, 45°, 90°, 135°, 180°, 225°, 270°, 315° and 360° or thereabouts, and are merely illustrative rather than limiting. In the context of its application to a vehicle switch arrangement, references to N or 0° are generally, but not exclusively, references to the forward direction of the vehicle. Of course, the precise positioning and orientation of the switch arrangement in a vehicle or in any other application, and of the controls in the array, will depend on the space available for mounting the arrangement and on its dimensions and layout. A person skilled in the art will be able to design the arrangement to suit the particular application.

When the switch arrangement of the invention is intended for use in a vehicle to control the operation of the electric windows and electric wing mirrors, for example, the device selection switch is used to select which of the windows and wing mirrors to operate. In the most logical arrangement, the left hand position is used to control the movement of the left hand wing mirror, with the exposed controls at N, S, E and W being used to tilt the mirror upwards, downwards, to the right and to the left respectively. Similarly, the right hand position is used to control the movement of the right hand wing mirror, again with the exposed controls at N, S, E and W being used to tilt the mirror up, down, right and left.

In the home position, there will effectively be two exposed controls to the left side (at NW and SW) and two exposed controls on the right side (NE and SE) of the device selection switch and, continuing with the same logic, these may be allocated respectively to operating the left and right side windows. Those controls towards the top (i.e. pointing towards the front of the vehicle) of the array (the NW and NE positions) actuating upward (closing) movement of the windows and those towards the bottom (the SW and SE positions) actuating downward (opening movement) of the windows.

Of course, where the vehicle has both front and rear opening windows, it is desirable that these be independently operable. To this end, it is preferred that the device selection switch further comprises a fourth switch state. The fourth switch state may, for example, involve rotating the device selection switch through 180° so that the arm previously in the N position now assumes the S position. Accordingly, when in the home position, movement of any of the exposed controls in the NE, SE, SW and NW positions preferably operates the vehicle's front left side and right side windows, while movement of the same controls when in the fourth position will operate the rear left and right side windows.

Rotating the device selection switch through 180° to achieve the fourth switch state does however require a level of awareness of the current switch state on the part of the driver if he is to select another switch state in a single turn of the switch. For example, the driver may think that by turning the switch 45° anti-clockwise from an apparent "home position" he is selecting the left hand wing mirror, but this will not necessarily be the case if he is starting from the fourth position as described above. It will be appreciated that when the driver is acting by touch alone, the home position and the fourth switch position may feel identical, as indeed do the left hand and right hand positions.

This difficulty may be mitigated by including a marker, such as a light or a coloured dot, or a rib or projection, or any combination thereof, on the upper surface of the device selection switch by which a user can tell which position the switch is in and hence the device currently selected. In the case of a cruciform switch, for example, any such marker is preferably positioned on the arm pointing N when the switch is in its home position. In this way, if the driver detects that the marker is offset to the left of the home position, he will know for example that the device selection switch is set for the left side mirror adjustment.

In a preferred arrangement, however, the device selection switch includes an auxiliary selection switch for selecting a subset of a device selected by the device selection switch. As an example, such an auxiliary selection switch may be employed to select which of the front or rear windows is to be operated. Even with an auxiliary switch, the inclusion of a marker to indicate which device is currently selected is still desirable.

For convenience, the auxiliary selection switch may be located on the upper surface of the device selection switch, and may comprise a slider-type switch, a rocker-type switch or a toggle switch.

Following the logic of the switch arrangement layout already described, the auxiliary selection switch is advantageously aligned according to the device it is associated with. For example, when the auxiliary selection switch is used to select which of the front or rear windows is to be operated, the switch may comprise a slider-type switch having a pad slidably mounted in a track, the track being aligned with the front-to-rear (N-S) axis of the vehicle such that sliding the pad to the forward position selects the vehicle's the front windows for movement and sliding to the rearward position selects the vehicle's rear windows. As with the device selection switch itself, the auxiliary selection switch preferably operates between latched positions. There may also be an intermediate "neutral" latched position in which neither forward nor rear windows are selected.

At least with regard to the window adjustment feature, it is possible for both of the front windows or both of the rear windows (depending which set is selected), to be operated simultaneously.

According to a second aspect of the invention, there is provided a vehicle electric window and wing mirror control system comprising a switch arrangement according to the first aspect of the invention and/or the described embodiments.

In a vehicle, operation or adjustment of wing mirrors or electric windows is typically controlled by means of a Body Control Unit (BCU). Each of the device selection switch and controls of the invention is therefore preferably connected to a respective input of the BCU, typically via a logic controller or processor, which in turn is connected to various actuators and drivers, such as electric motors or solenoid actuators, via relays where necessary, used to move the electrical devices.

Movement of the switches and/or controls into various positions causes electrical signals to be applied to the inputs of the logic controller. The logic controller processes these signals and generates the appropriate signal to be applied to the BCU in order to effect operation of the selected device. The BCU processes the signal received from the logic controller and applies an activating signal to the relevant driver or relay, thereby to operate the selected device.

The logic controller may be integral with the switch arrangement or with the BCU. Alternatively, the logic controller may be a separate unit. Where the vehicle is not provided with a BCU or equivalent, the logic controller may be connected directly to the drivers or relays for direct control thereof.

According to a third aspect of the invention, there is provided a vehicle having a switch arrangement or a control system of the first and second embodiments.

By means of the invention, there is provided a switch arrangement that not only performs a dual function, namely to control both the electrically operable windows and electrically adjustable wing mirrors, but also that prevents the driver from operating or adjusting the windows or mirrors when the relevant function is not selected. Moreover, the arrangement is such that it lends itself to an intuitive layout of the various switches and controls making it easy for a driver to operate without necessarily having to take his eyes from the road.

A yet further benefit is that the switch arrangement of the invention is not unique for left hand drive or right hand drive vehicles, so it may be incorporated in either type of vehicle without any need for adaptation. In this regard, the arrangement may conveniently be centrally mounted, for example on the centre console, permitting operation by the driver or front passenger.

The present invention will now be described, by way of example only, with reference to the accompanying drawings in which:
Figure 1 is a plan view of a switch arrangement according to one aspect of the present invention in a first position;
Figure 2 shows the switch arrangement of Figure 1 in a second position;
Figure 3 shows the switch arrangement of Figure 1 in a third position;
Figure 4 is a perspective view of an alternative switch arrangement according to another aspect of the invention;
Figure 5 is a plan view of the switch arrangement of Figure 4 in a first position;
Figure 6 is a plan view of the switch arrangement of Figure 4 in a second position;
Figures 7A to 7F show the component parts of the switch arrangement of Figure 4; and
Figure 8 is a side view of the assembled switch arrangement of Figures 7A to 7F.

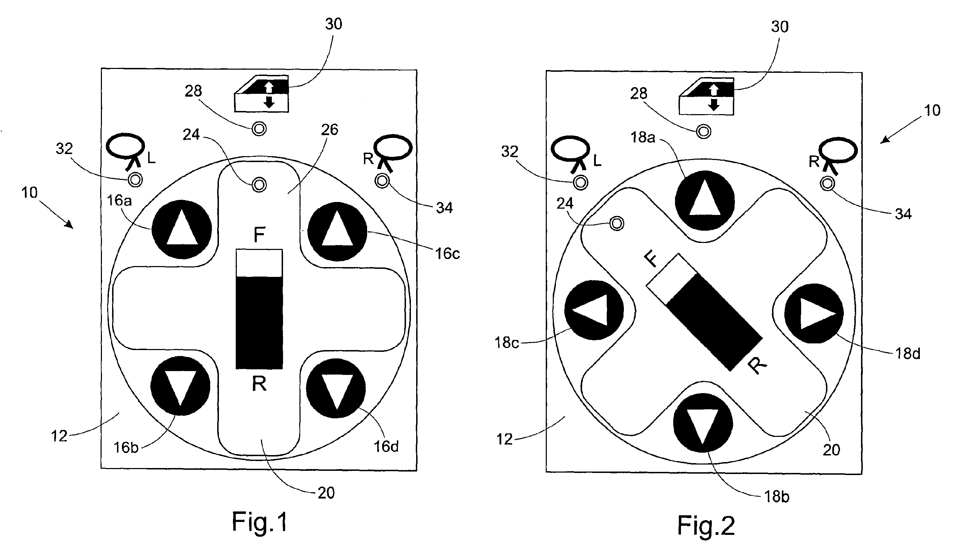

Referring firstly to Figure 1, there is shown a switch arrangement 10 for a vehicle, such as an automobile, for controlling and/or adjusting a pair of electrically operable wing mirrors (not shown) and the front and rear door windows (not shown).

The arrangement 10 includes a control pad 12 carrying a circular array of eight touch sensitive movement controls, 16a, 16b, 16c, 16d and 18a, 18b, 18c, 18d (not visible). Rotary switch 20 for selecting which of the mirrors or doors is to be operated is of generally cruciform shape and overlies the control pad 12 such that only controls 16a, 16b, 16c, 16d are exposed in the position shown. Aligned along the N-S axis of the switch 20 is auxiliary selection switch 22 of the slider type.

Controls 16a, 16b, 16c, 16d operate the windows of the vehicle, controls 16a and 16b controlling upwards (closing) and downwards (opening) movement respectively of a left side window and controls 16c and 16d controlling upwards and downwards movement of a right side window. Each of the controls 16a, 16b, 16c, 16d carries on its upper surface an arrowhead to indicate the direction of movement resulting from operation of that control.

When the slider switch 22 is slid towards a rear position as shown, each of the controls 16a, 16b, 16c, 16d acts on the vehicle's rear windows. When the slider switch is slid to a forward position (not shown), the controls 16a, 16b, 16c, 16d then act on the vehicle's front windows. Indicators "F" and "R" are associated with the slider switch 22 to identify which of the forward or rear windows is currently selected for operation.

When the switch arrangement 10 is installed in a vehicle, arm 26 of rotary switch 20 will usually be pointed towards the front end of the vehicle in the home position illustrated. To assist the driver in confirming that the rotary switch is in the home position and hence the windows are selected for movement, the rotary switch 20 carries a marker 24, such as an illuminated or luminous spot, on the arm 26. Marker 24 aligns with a similar marker 28 on the control pad 12. A window symbol 30 is included adjacent the marker 28 to further identify the control selected.

Further markers 32, 34 aligned radially with controls 16a, 16c, at approximately 45° anticlockwise and clockwise respectively, are located on the control pad 12. A wing mirror symbol is associated with each of the markers 32, 34, marker 32 associated with a left hand wing mirror symbol and marker 34 associated with a right hand wing mirror symbol.

In the event that a driver wishes to select the left hand wing mirror for adjustment, the rotary switch is rotated to the left, approximately 45° in an anti-clockwise position from the home position of Figure 1, to the second position illustrated in Figure 2. In doing so, controls 16a, 16b, 16c, 16d become obscured by the arms of the rotary switch 20 but controls 18a, 18b, 18c, 18d become exposed.

Each of the controls 18a, 18b, 18c, 18d also carries on its upper surface an arrowhead to indicate the direction of movement resulting from operation of that control, in this case controls 18a, 18b controlling upwards and downwards movement respectively of the mirror and controls 18c, 18d controlling movement to the left and to the right respectively. If the driver wishes to have a wider view of the road to the nearside of the vehicle then, with the rotary switch 20 occupying the position shown in Figure 2, he depresses control 18c to move the wing mirror to the left (strictly speaking clockwise around a generally vertical axis).

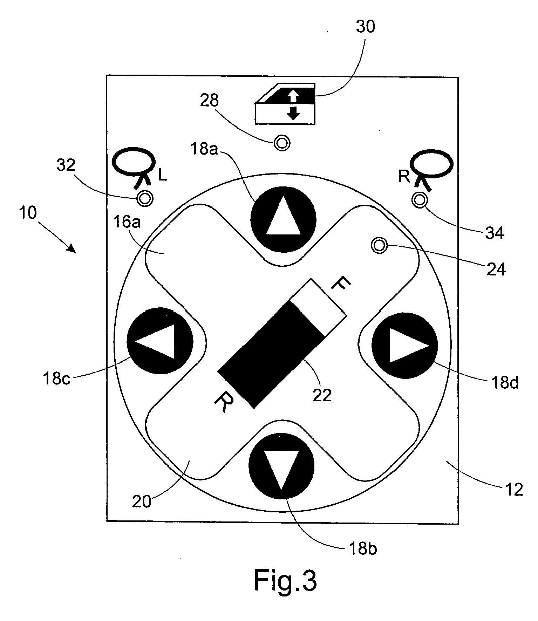

To adjust the position of the right hand wing mirror, the driver is required to move the rotary switch 20 to the third position shown in Figure 3, namely to the right of the home position of Figure 1. If starting from the second position of Figure 2, the driver will be required to move the switch through the first or home position to the third position. In the third position, the same controls 18a, 18b, 18c, 18d are exposed as in the second position but, by virtue of the different position of the rotary switch 20, operation thereof causes the right hand wing mirror to be adjusted.

In order that the driver can tell which of the wing mirrors has been selected for movement, marker 24 aligns with either the marker 32 when the left hand wing mirror is selected, or marker 34 when the right hand wing mirror is selected. As well as being visually distinguishing, marker 24 may be raised or lowered from the upper surface of the rotary switch 20 so that the driver can identify which position the switch 20 is in merely by touch.

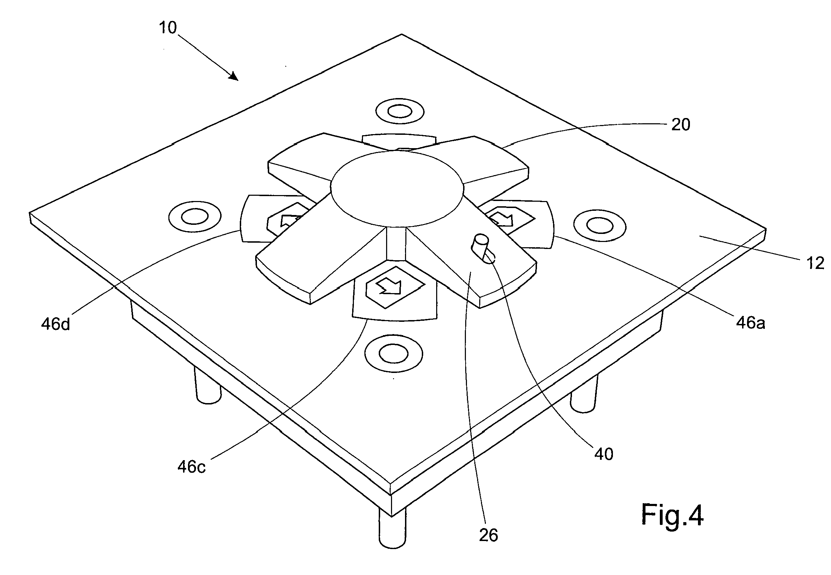

Figure 4 shows a perspective view from above of an alternative switch arrangement according to another aspect of the invention and for convenience uses the same reference numerals as in Figures 1 to 3 for similar parts.

Specifically, Figure 4 shows a switch arrangement 10 comprising a generally cruciform rotary switch 20 superimposed on control pad 12. Instead of a slider switch (as shown in Figures 1 to 3), there is a toggle switch 40 located on arm 26 which acts as an auxiliary switch to select which of the front or rear windows (not shown) is selected for movement when the rotary switch 20 is in the home position (illustrated).

The control pad 12 includes a segmented array of pads, 46a, 46b, 46c, 46d and 48a, 48b, 48c, 48d (not shown), each of which is pressure-sensitive and communicates with a corresponding push button control underneath (not shown).

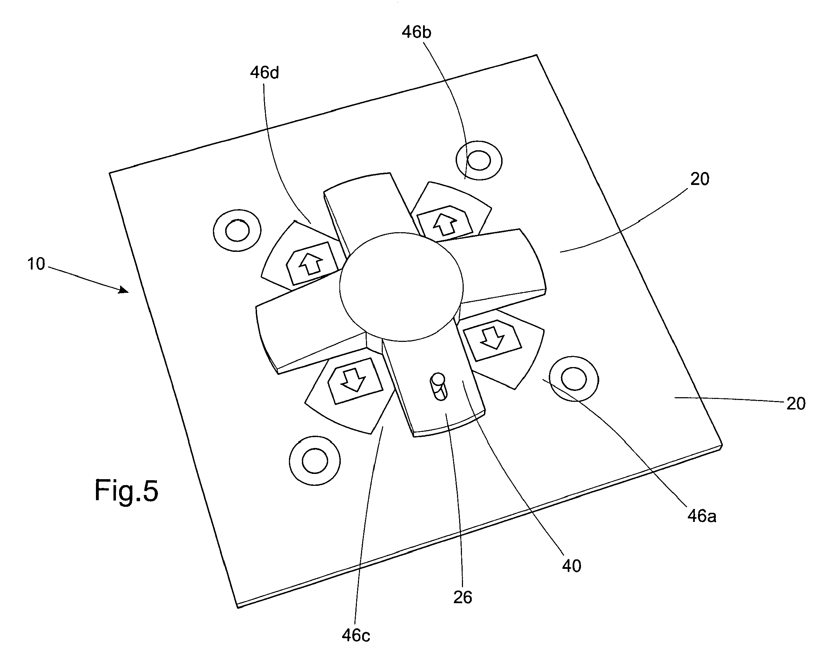

The position shown in Figure 4 corresponds to the home position of Figure 1, with arm 26 pointing in the forward direction of the vehicle, and window control pads 46a, 46b, 46c, 46d exposed. In such an arrangement, the toggle switch 40 acts as a marker which may be used by the driver to identify the current position of the rotary switch 40 either visually or by feel. As is more clearly seen in Figure 5, each of the control pads 46a, 46b, 46c, 46d carries a window symbol on its upper surface along with an arrow pointing to the direction of movement that results from pressing the pad.

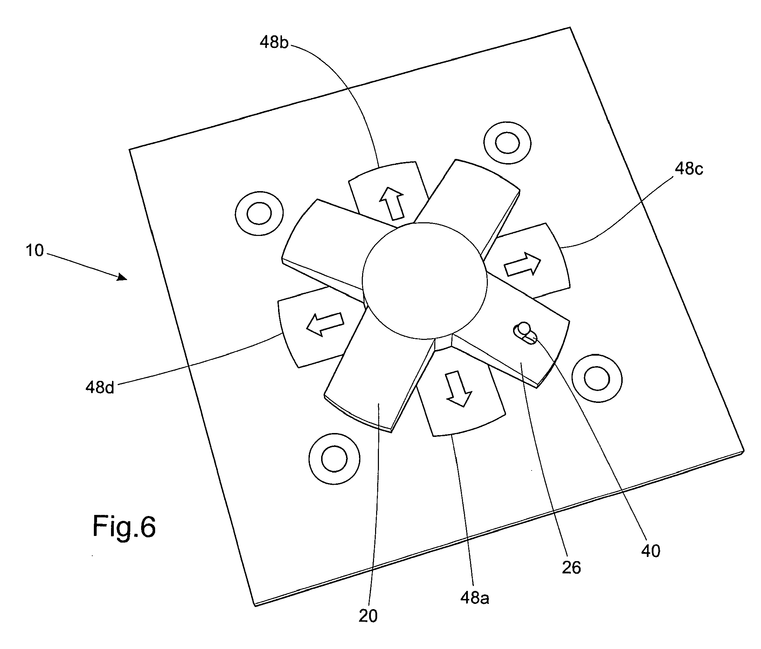

When the rotary switch 20 is rotated anticlockwise by 45° to the position shown in Figure 6, the left hand wing mirror is selected for movement (corresponding to the second position of Figure 2). In this position, control pads 48a, 48b, 48c and 48d are exposed with pads 46a, 46b, 46c, 46d being obscured by the rotary switch 20. Control pads 48a, 48b, 48c and 48d carry arrowhead symbols, different to the window symbols on pads 46a, 46b, 46c and 46d, to tell the driver that he has selected the wing mirrors for movement and the direction of movement for each.

In the event that the driver wishes to select the right hand mirror for movement, he simply has to rotate the rotary switch 20 in a clockwise direction for 90° (or 45° from the home position of Figures 4 and 5).

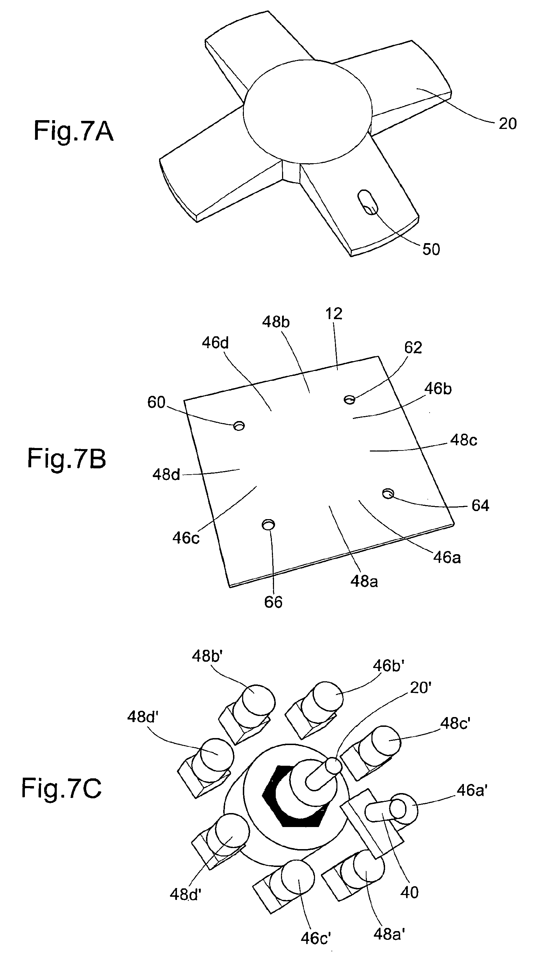

The parts of the assembly for the switch arrangement of Figures 4 to 6 are shown in Figures 7A to 7F. Figure 7A shows rotary switch 20 having an aperture 50 for receiving the toggle of the toggle switch (not shown). Figure 7B shows the control pad 12 with a circular array of control pads 46a, 46b, 46c, 46d, 48a, 48b, 48c, 48d each carrying a symbol relating to its function and/or its associated direction of movement. Fixing holes 60, 62, 64, 66 extend through the pad 12.

Push button controls 46a', 46b', 46c', 46d', 48a', 48b', 48c', 48d' associated with control pads 46a, 46b, 46c, 46d, 48a, 48b, 48c, 48d are shown in Figure 7C along with rotary switch control 20' and toggle switch 40.

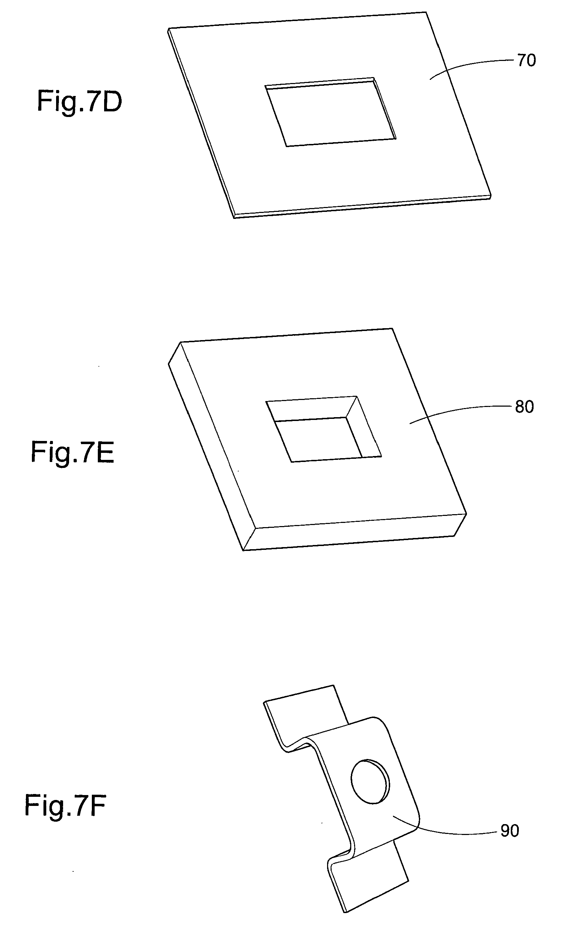

Figure 7D shows a printed circuit board switch support layer 70 and Figure 7E a further support element 80, typically of MDF, on which the entire assembly is mounted.

Figure 7F shows a support bracket 90, preferably made of steel, on which the rotary switch 20 is mounted.

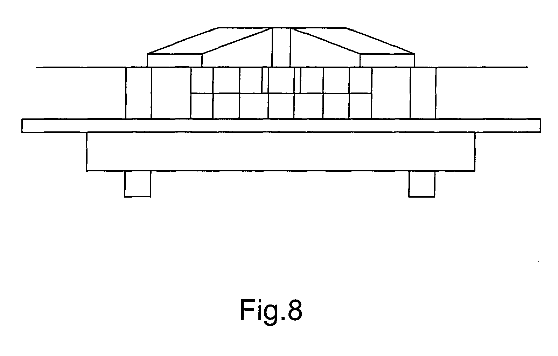

A side view of the switch arrangement of Figures 4 to 6 comprising the parts of Figures 7A to 7F is shown in Figure 8. The parts are held together by four fixing screws 92 (only two visible).

It will be appreciated that a number of variations and/or improvements can be made to the invention and that the described embodiments are not intended to be limiting. For example, the control pad may be circular and the fixing holes for the assembly obscured by the device selection switch. Additionally, when the device selection switch is a rotary switch, its degree of rotation may be limited so that, for example, it is prevented from rotating beyond the second and third positions described above.

## Claims

1. A vehicle electric window and wing mirror control system comprising a switch arrangement (10) for controlling the operation of a plurality of electrically operable devices, the switch arrangement (10) comprising an array of controls (16a, 16b, 16c, 16d, 18a, 18b, 18c, 18d; 46a', 46b', 46c', 46d', 48a', 48b', 48c', 48d') for controlling the operation of each of the devices and a device selection switch (20) operable between a plurality of switch states, each state being associated with a selected device, wherein the device selection switch (20) is superimposed on the control array (16a, 16b, 16c, 16d, 18a, 18b, 18c, 18d; 46a', 46b', 46c', 46d', 48a', 48b', 48c', 48d') such that only those controls in the array relating to the device selected are accessible.

2. A system according to claim 1, further comprising an auxiliary selection switch (22; 40) for selecting either the vehicle front windows or the vehicle rear windows for movement.

3. A system according to claim 2, wherein the auxiliary selection switch (22; 40) is aligned with the N-S axis of the device selection switch (20) and movement of the switch towards the N position selects the front windows for movement and movement of the switch towards the S position selects the rear windows for movement.

4. A system according to claim 2 or 3, wherein the auxiliary selection switch comprises a toggle switch (40).

5. A system according to any one of claims 1 to 4, wherein the cruciform switch (20) has a second position in which its four arms point NW, SW, NE and SE for obscuring the alternate window controls (16a, 16b, 16c, 16d; 46a', 46b', 46c', 46d') and exposing the four wing mirror controls (18a, 18b, 18c, 18d; 48a', 48b', 48c', 48d') therebetween.

6. A system according to claim 5, wherein the four wing mirror controls (18a, 18b, 18c, 18d; 48a', 48b', 48c', 48d') located at the N, S, E and W positions in the array control the tilting movement of the wing mirrors upwards, downwards, to the right and to the left respectively.

7. A system according to claim 5 or claim 6, wherein the second position involves rotation of the device selection switch (20) about 45° in an anticlockwise direction from the first position for selection of the left hand wing mirror.

8. A system according to any one of claims 1 to 7, wherein the cruciform switch (20) has a third position in which its four arms point NW, SW, NE and SE for obscuring the alternate window controls (16a, 16b, 16c, 16d; 46a', 46b', 46c', 46d') and exposing the four wing mirror controls (18a, 18b, 18c, 18d; 48a', 48b', 48c', 48d') therebetween.

9. A system according to claim 8, wherein the third position involves rotation of the device selection switch (20) about 45° in a clockwise direction from the first position for selection of the right hand wing mirror.

10. A system according to claim 9, wherein the rotation of the device selection switch (20) is limited to the second position in the anticlockwise direction and to the third position in the clockwise direction from the first position.

11. A system according to any one of claims 1 to 10, wherein each of the positions of the device selection switch (20) is a latched position.

12. A system according to any one of claims 1 to 11, wherein the arm of the device selection switch (26) that points N in the first position carries a marker (24).
